# EUROPÄISCHE PATENTSCHRIFT

(11) **EP 1 440 764 B1**
(45) Veröffentlichungstag und Bekanntmachung des Hinweises auf die Patenterteilung: **18.10.2006**
(21) Anmeldenummer: 04100256.9
(22) Anmeldetag: 26.01.2004
(51) Int. Cl.: B23Q 1/58

(54) **Führungsprofil mit Zahnstange**
Guiding profile with toothed strip
Profil de guidage avec crémaillère

(30) Priorität: 27.01.2003 DE 10303007
(43) Veröffentlichungstag der Anmeldung: 28.07.2004
(73) Patentinhaber: HILTI Aktiengesellschaft, 9494 Schaan (LI)
(72) Erfinder: Reitberger, Rudolf, 81379, München (DE)
(74) Vertreter: Wildi, Roland

(56) Entgegenhaltungen:
- US-A- 5 549 390

## Beschreibung

Die Erfindung bezeichnet ein Führungsprofil zur Längsführung eines Maschinenschlittens einer Werkzeugmaschine mit einer axialen Zahnstange für den Längsvorschub nach dem Oberbegriff des Anspruchs 1 (siehe, z.B., US-5549390-A).

Derartige Führungsprofile mit einer axialen Zahnstange werden insbesondere für Bohrständer und Führungsschienen bei der Bearbeitung von Gestein, bspw. für Kernbohrmaschinen und Steinsägemaschinen verwendet. Um die dabei auftretenden hohen Biege- und Torsionsmomente deformationsarm aufnehmen zu können und gleichzeitig bei einer Länge von bis zu mehreren Metern transportabel zu bleiben, müssen die Führungsprofile als hochsteife Hohlprofile aus stranggezogenem Aluminium oder Aluminiumlegierungen ausgebildet sein.

Nach der DE4326194 ist eine Zahnstange einstückig mit dem Führungsprofil ausgebildet. Durch die relativ zu Stahl geringere Festigkeit müsste eine gleichbelastbare Zahnstange bei Aluminiumprofilen breiter ausgebildet sein, wodurch breitere und somit schwerere und voluminösere Zahnstangenantriebe notwendig wären.

Nach der US5549390 weist ein als hochsteifes Hohlprofil ausgebildetes Führungsprofil einer Führungsschiene einer Kernbohrmaschine eine in einer rechteckigen Aufnahmenut angeordnete, im Querschnitt rechteckige, Zahnstange auf. Nach der DE19749625 weist ein als hochsteifes Hohlprofil aus stranggezogenem Aluminium ausgebildetes Führungsprofil eine keilförmig erweiterte Aufnahmenut für eine Zahnstange auf. Die Zahnstange muss jeweils durch separate Befestigungsmittel in der Aufnahmenut befestigt werden. Die sich durch die Zahnstange hindurch erstreckenden Befestigungsbohrungen schwächen die Zahnfestigkeit, wodurch ein Zahnbruch wahrscheinlicher wird.

Nach der US5845996 ist eine Zahnstange über mehrere Schrauben und Muttern in einer hinterschnittenen Befestigungsnut eines, als hochsteifes Hohlprofil aus Aluminium ausgebildeten, Führungsprofils befestigt. Das Bohren von Zahnstange und Führungsprofil sowie das anschliessende Verschrauben ist technologisch aufwendig und erhöht durch die Schrauben und Muttern wesentlich die Anzahl der benötigten Bauteile.

Die Aufgabe der Erfindung besteht in einer technologisch einfachen Realisierung eines, als hochsteifes Hohlprofil ausgebildeten, Führungsprofils mit einer separaten Zahnstange.

Die Aufgabe wird durch die Merkmale des unabhängigen Anspruchs 1 gelöst. Vorteilhafte Weiterbildungen ergeben sich aus den Unteransprüchen.

Im Wesentlichen weist ein Führungsprofil zur Führung eines Maschinenschlittens einer Werkzeugmaschine entlang einer Längsachse A mit einer separaten axialen Zahnstange für den Längsvorschub des Maschinenschlittens eine in einer aussenseitig offenen Aufnahmenut angeordnete Zahnstange mit einer nach aussen orientierten Verzahnung auf, wobei die Zahnstange im Querschnitt mindestens zwei gegenüberliegende, zur Verzahnung seitlich hinterschnittene, Stege ausbildet, über welche der Nutrand der Aufnahmenut des Führungsprofils zumindest teilweise eingedrückt ist.

Durch die beiden gegenüberliegenden, zur Verzahnung seitlich hinterschnittenen, Stege der Zahnstange kann mittels über die Stege hinweg, in den freien Hinterschnitt einkragendes, plastisch deformierten Materials des Führungsprofils die Zahnstange unlösbar formschlüssig befestigt werden. Insbesondere kann ein plastisch fliessfähiges Material wie Aluminium mittels zweier längs der Zahnstange bewegten Walzen über die Stege hinweg gedrückt und somit gebördelt werden, was technologisch sehr einfach ist.

Vorteilhaft weist die Zahnstange seitlich zwei gegenüberliegende Längsnuten auf, wodurch die Stege durch den innenseitigen Rest der Seitenfläche und die Hinterschneidungen durch die Längsnuten ausgebildet sind. Zudem sind derartige Stege technologisch einfach aus standardisiert in Meterware verfügbaren Zahnstangen mit rechteckigem Querschnitt herstellbar.

Vorteilhaft sind die Längsnuten vollständig ausserhalb der Verzahnung angeordnet, wodurch die Verzahnung bei einer technologisch einfachen, quer zur Längsrichtung erfolgenden Paketbearbeitung mehrerer Zahnstangen zur spanenden Einbringung der Verzahnung, direkt aneinander anliegt.

Vorteilhaft weist die Zahnstange zumindest eine der Verzahnung gegenüberliegende, beidseitig axial begrenzte Ausnehmung auf, in welche eine sich quer zur Längsachse erstreckende Verbindungsbuchse zur Kupplung mit einem weiteren Führungsprofil stirnseitig eingreift, wodurch diese zur exakten axialen Positionierung der Zahnstange zum Führungsprofil dient sowie zusätzlich Längskräfte formschlüssig aufnehmen kann.

Die Erfindung wird bezüglich eines vorteilhaften Ausführungsbeispiels näher erläutert mit:
Fig. 1 als Führungsprofil im Querschnitt;
Fig. 2 als vergrösserter Ausschnitt des Bereiches II der Fig. 1;
Fig. 3 als Führungsprofil im Längsschnitt nach Ebene III-III der Fig. 1.

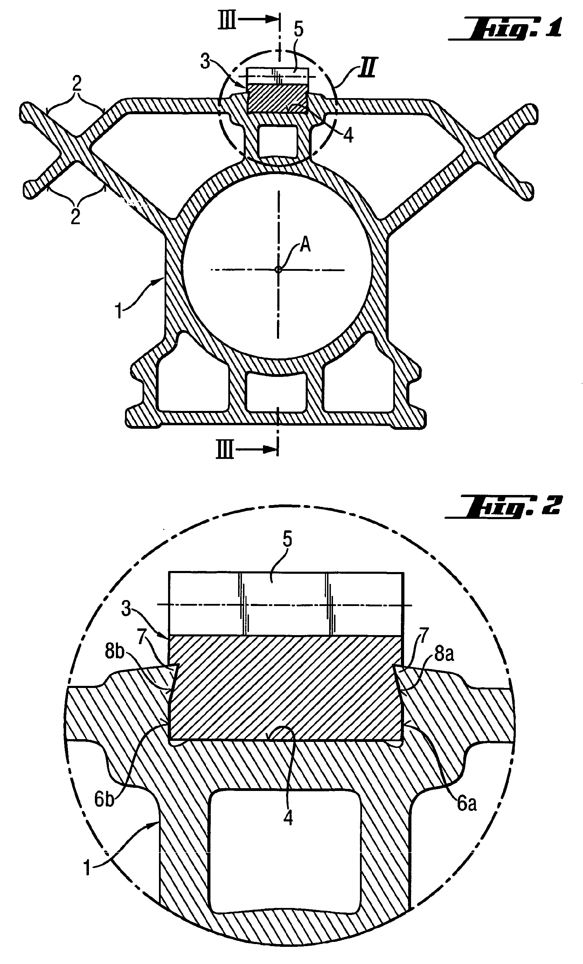

Nach Fig. 1 weist ein Führungsprofil 1 aus stranggezogenem Aluminium mit Führungsflächen 2 zur Führung eines nicht dargestellten Maschinenschlittens einer nicht dargestellten Werkzeugmaschine entlang einer Längsachse A eine separate axiale Zahnstange 3 aus Stahl auf, die in einer aussenseitig offenen Aufnahmenut 4 angeordnet ist. Die Zahnstange 3 weist eine nach aussen orientierten Verzahnung 5 auf.

Nach Fig. 2 weist die Zahnstange 3 im Querschnitt zwei gegenüberliegende, zur Verzahnung 5 seitlich hinterschnittene Stege 6a, 6b ausbildenden, über welche je ein Nutrand 7 der Aufnahmenut 4 des Führungsprofil 1 eingedrückt ist. Die Zahnstange 3 weist seitlich zwei gegenüberliegende Längsnuten 8a, 8b auf, die vollständig ausserhalb der Verzahnung 5 angeordnet sind.

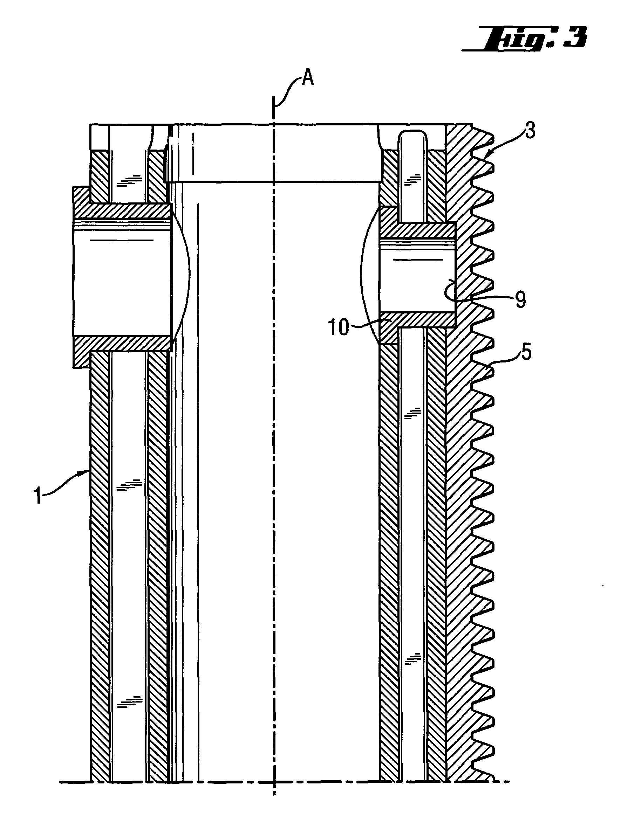

Nach Fig. 3 weist die Zahnstange 3 im Längsschnitt eine der Verzahnung 5 gegenüberliegende, beidseitig axial begrenzte Ausnehmung 9 auf, in welche eine sich quer zur Längsachse A erstreckende Verbindungsbuchse 10 formschlüssig eingreift.

## Patentansprüche

1. Führungsprofil zur Längsführung eines Maschinenschlittens einer Werkzeugmaschine mit einer separaten axialen Zahnstange (3) für den Längsvorschub des Maschinenschlittens mit einer, in einer aussenseitig offenen Aufnahmenut (4) angeordneten, Zahnstange (3) mit einer nach aussen orientierten Verzahnung (5), **dadurch gekennzeichnet, dass** die Zahnstange (3) im Querschnitt mindestens zwei gegenüberliegende, zur Verzahnung (5) seitlich hinterschnittene Stege (6a, 6b) ausbildet, über welche der Nutrand (7) der Aufnahmenut (4) zumindest teilweise eingedrückt ist.

2. Führungsprofil nach Anspruch 1, **dadurch gekennzeichnet, dass** die Zahnstange (3) seitlich zwei gegenüberliegende Längsnuten (8a, 8b) aufweist.

3. Führungsprofil nach Anspruch 2, **dadurch gekennzeichnet, dass** die Längsnuten (8a, 8b) vollständig ausserhalb der Verzahnung (5) angeordnet sind.

4. Führungsprofil nach einem der Ansprüche 1 bis 3, **dadurch gekennzeichnet, dass** die Zahnstange (3) zumindest eine der Verzahnung (5) gegenüberliegende, beidseitig axial begrenzte Ausnehmung (9) aufweist, in welche eine sich quer zur Längsachse (A) erstreckende Verbindungsbuchse (10) zur Kupplung mit einem weiteren Führungsprofil (1') stimseitig eingreift.

## Claims

1. Guide section for longitudinally guiding a carriage of a machine tool, comprising a separate axial rack (3) for the longitudinal feed of the carriage, the rack (3) being arranged in a locating groove (4) open on the outside and being provided with outwardly directed teeth (5), **characterised in that** the rack (3) in cross section forms at least two opposing webs (6a, 6b) laterally undercut relative to the teeth (5), by means of which the edge (7) of the locating groove (4) is at least partially pressed in.

2. Guide section according to claim 1, **characterised in that** the rack (3) is provided laterally with two opposing longitudinal grooves (8a, 8b).

3. Guide section according to claim 2, **characterised in that** the longitudinal grooves (8a, 8b) are arranged completely outside the teeth (5).

4. Guide section according to one of claims 1 to 3, **characterised in that** the rack (3) has at least one recess (9) situated opposite the teeth (5) and delimited axially on both sides, engaged at its end face by a connecting bushing (10) extending transversely to the longitudinal axis (A) for coupling to another guide section (1').

## Revendications

1. Profil de guidage pour le guidage longitudinal d'un chariot de machine d'une machine-outil, avec une crémaillère axiale séparée (3) pour l'avance longitudinale du chariot de machine, comportant une crémaillère (3) qui est disposée dans une rainure réceptrice (4) ouverte côté extérieur et est pourvue d'une denture (5) orientée vers l'extérieur, **caractérisé en ce qu'**en coupe transversale la crémaillère (3) comporte au moins deux talons (6a, 6b) qui sont situés à l'opposé l'un à l'autre et créent une contre-dépouille latérale par rapport à la denture et grâce auxquels le bord de rainure (7) de la rainure réceptrice (4) est au moins partiellement rentré vers l'intérieur.

2. Profil de guidage selon la revendication 1, **caractérisé en ce que** la crémaillère (3) comporte latéralement deux gorges longitudinales (8a, 8b) situées à l'opposé l'une de l'autre.

3. Profil de guidage selon la revendication 2, **caractérisé en ce que** les gorges longitudinales (8a, 8b) sont disposées complètement à l'extérieur de la denture (5).

4. Profil de guidage selon une des revendications 1 à 3, **caractérisé en ce que** la crémaillère (3) comporte au moins un évidement (9) qui est délimité axialement des deux côtés et situé à l'opposé de la denture (5) et dans lequel un fourreau de liaison (10) s'étendant transversalement à l'axe longitudinal (A) s'engage frontalement pour l'accoupler à un autre profil de guidage (1').
